# EUROPÄISCHE PATENTSCHRIFT

(11) **EP 3 884 481 B1**
(45) Veröffentlichungstag und Bekanntmachung des Hinweises auf die Patenterteilung: **07.06.2023**
(21) Anmeldenummer: 19805959.4
(22) Anmeldetag: 19.11.2019
(51) Int. Cl.: G09B 15/02, G09F 1/00, G06K 7/10

(54) **SMARTBOARD UND SET ZUM DIGITALISIEREN VON WORKSHOP-ERGEBNISSEN**
SMARTBOARD AND SET FOR DIGITALIZING WORKSHOP RESULTS
CARTE INTELLIGENTE ET ENSEMBLE POUR LA NUMÉRISATION DE RÉSULTATS D'ATELIER

(30) Priorität: 22.11.2018 CH 14452018
(43) Veröffentlichungstag der Anmeldung: 29.09.2021
(60) Teilanmeldung: 23155681.2
(73) Patentinhaber: Trihow AG, 6300 Zug (CH)
(72) Erfinder: KNÜSEL, Beat, 6405 Immensee (CH)
(74) Vertreter: Zwick, Evelyn
(86) Internationale Anmeldenummer: PCT/EP2019/081768
(87) Internationale Veröffentlichungsnummer: WO 2020/104443

(56) Entgegenhaltungen:
- DE-A1- 3 148 885
- US-A- 5 295 342
- US-A1- 2007 176 780
- US-A1- 2011 252 946
- US-A1- 2016 300 089
- US-A1- 2016 343 264
- MIKKO PYYKKÖNEN ET AL: "Activity pad : teaching tool combining tangible interaction and affordance of paper", PROCEEDINGS OF THE 2013 ACM INTERNATIONAL CONFERENCE ON INTERACTIVE TABLETOPS AND SURFACES, ITS '13, 1. Januar 2013 (2013-01-01), Seiten 135-144, XP055682256, New York, New York, USA DOI: 10.1145/2512349.2512810 ISBN: 978-1-4503-2271-3

## Beschreibung

### Technisches Gebiet

Die Erfindung betrifft ein Clipboard ausgestaltet als Unterlage für ein Blatt Papier mit einer Befestigung dafür, wobei die Unterlage mit mindestens einem, vorzugsweise mit zwei RFID-Transpondern versehenen ist, sowie mindestens ein Blatt Papier mit einem RFID-Transponder, wobei je ein RFID-Transponder der Unterlage und des Papiers miteinander in Kommunikationsnähe angeordnet sind, wenn das Blatt Papier an der Befestigung fixiert ist

### Stand der Technik

Als Arbeitsunterlagen für Workshops dienen beispielsweise Whiteboards, Pinnwände, Wandtafeln oder Tische. Auf solchen herkömmlichen Arbeitsunterlagen wie Whiteboards oder Pinnwänden notieren Teilnehmer beispielsweise ihre Ideen auf Zetteln und bringen diese daran an, damit alle sie sehen können. Anschliessend wird evaluiert, doppelte Nennungen werden entfernt, Ähnliche gebündelt, Wichtige mit weiteren Nennungen ausgeschmückt. Je nach Zweck des Workshops werden Reihenfolgen festgelegt und/oder Prioritäten gesetzt und am Ende Aufgaben und Verantwortlichkeiten zugeteilt.

Begleitet werden solche Workshops oft von Moderatoren, ausgestattet mit Moderatorenkoffern, die gut mit selbstklebenden Notizzetteln verschiedener Farben und Formen, Farbpunkten, Magnetknöpfen, Markern, Scheren, Stecknadeln und dergleichen bestückt sind. Die Arbeitsergebnisse können höchstens fotografisch festgehalten werden. Nach Fertigstellung werden sie aber nicht weiter verwendet, die Arbeitsunterlage wird wieder abgeräumt.

Andererseits sind elektronische Whiteboards, hier Smartboards genannt, bekannt, welche mit Elektronik bestückt sind, um verschiedene zusätzliche Funktionen zu übernehmen. Bekannt sind solche, die wie ein Tablet über einen Touchscreen, Schrifterkennung und weiteres mehr verfügen. So lassen sich vorerstellte Grafiken mit handschriftlichen Markierungen ergänzen und in geänderter Form abspeichern. Solche Smartboards sind aber sehr teuer und lassen sich, im Gegensatz zu einem Moderatorenkoffer, nicht einfach von einem Moderator mitbringen. Aus dem Stand der Technik ist von den Autoren Mikko Pyykkönen et al in einem Bericht «Activity Pad: Teaching Tool Combining Tangible Interaction ans Affordance of Paper», IST' 13 October 6-9, 2013, St. Andrews, UK, ein Activity Pad bekannt, das im Unterricht als Lernhilfe eingesetzt werden kann.

Aus US 2016/343264 A1 ist ein interaktives Buch bekannt, bei welchem die aufgeschlagene Seite mittels RFID erkannt wird.

### Darstellung der Erfindung

Es ist die Aufgabe der vorliegenden Erfindung, ein Clipboard eingangs beschriebener Art zum Digitalisieren von Workshop-Ergebnissen zu beschreiben, das transportabel ist und das in einer Ausführungsform

Arbeitsergebnisse in digitaler Form an einen Computer schicken kann, welcher diese weiterverarbeiten kann.

Die Erfindung wird gelöst durch die Merkmale des ersten Patentanspruchs. Erfindungsgemäss umfasst das Clipboard eine Markierung auf der Unterlage, welche angibt, wo genau das Papier platziert werden soll, sowie eine Vielzahl von Schaltern auf der Unterlage, die vorzugsweise in einer Matrix angeordnet sind, wobei das Blatt mit verschiedenen Informationen, Anweisungen und/oder Auswahl-Varianten versehen ist, sowie mit mehreren Kennzeichnungsfeldern, die jeweils an den Orten der Schalter des Clipboard angeordnet sind, wenn das Blatt auf der Markierung der Unterlage befestigt ist.

### Kurze Beschreibung der Zeichnungen

Im Folgenden wird die Erfindung in verschiedenen Zeichnungen dargestellt und mit Hilfe der später erläuterten Bezugszeichen näher erklärt. Es zeigen:
- Fig. 1a, 1b: eine schematische Darstellung eines Smartboards verbunden mit einem Computer, mit Sicht auf die erste Oberfläche (Fig. 1a) und auf die zweite Oberfläche (Fig. 1b);
- Fig. 2: eine schematische Innenansicht eines solchen Smartboards;
- Fig. 3a, 3b: eine schematische Teilansicht einer Innenansicht eines Smartboards in zwei alternativen Formen;
- Fig. 4: ein schematisch dargestellter Querschnitt durch einen Teilbereich eines Smartboards, an verschiedenen Stellen;
- Fig. 5: ein schematisch dargestellter Querschnitt durch ein aufgerolltes Smartboard
- Fig. 6: eine schematische Ansicht eines Objekts in Form einer Karte;
- Fig. 7: eine schematische Ansicht eines Objekts in Form einer Dose mit einem Innenraum;
- Fig. 8a, 8b: eine schematische Ansicht eines Verbindungselementes in zwei Ausführungsformen;
- Fig. 9: eine schematische Ansicht eines Smartbooks auf einem Smartboard;
- Fig. 10a, 10b: eine schematische Ansicht eines erfindungsgemässen Clipboards (a) und ein dafür geeignetes Blatt Papier (b).

### Wege zur Ausführung der Erfindung

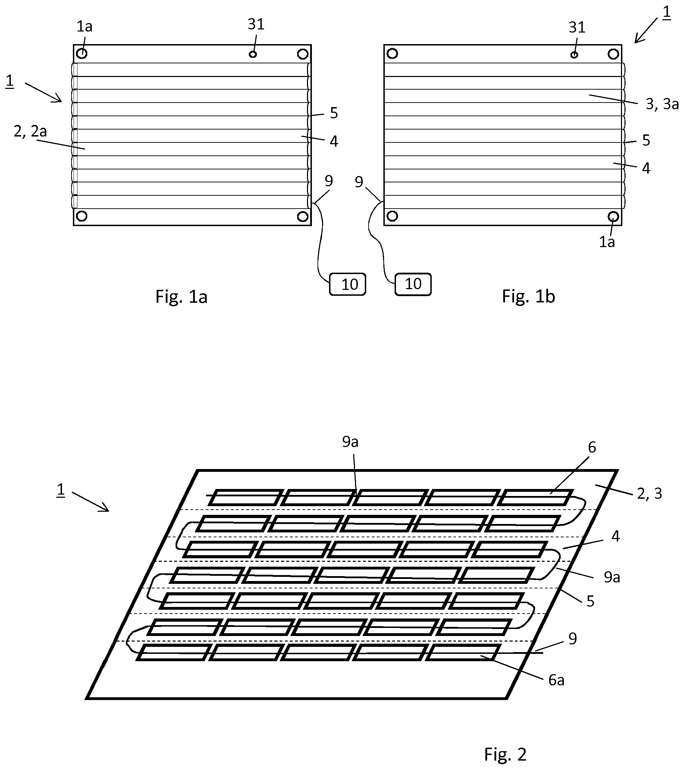

Die im Folgenden in Bezug auf die Figuren 1a, b bis 9 beschriebenen Beispiele fallen nicht unter den beanspruchten Gegenstand.

In Fig. 1a und 1b ist jeweils ein Smartboard 1 zum Digitalisieren von Workshop-Ergebnissen dargestellt, umfassend eine erste Oberfläche 2 und eine zweite Oberfläche 3, die parallel zueinander ausgestaltet sind.

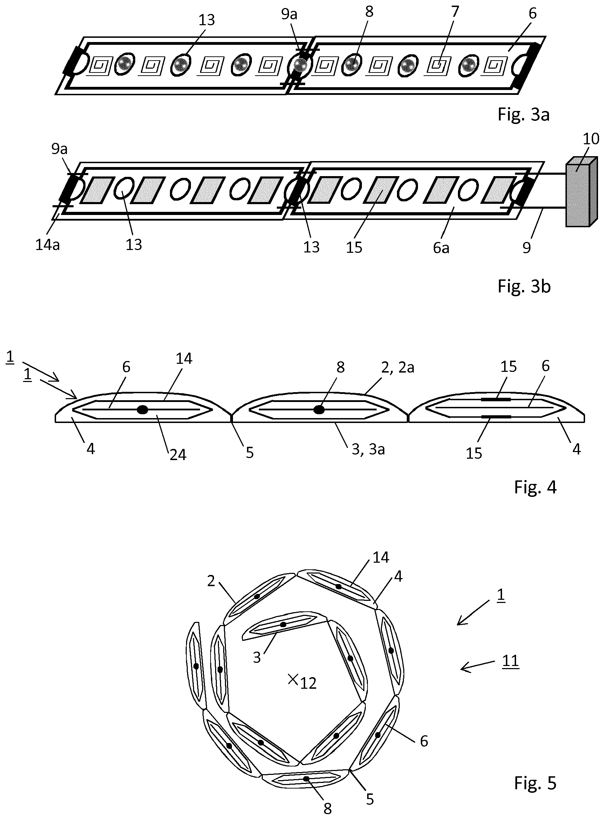

Ein solches Smartboard 1 lässt sich entweder auf einen Tisch legen oder an eine Wand oder auf ein herkömmliches Whiteboard hängen, wobei dafür am Smartboard 1 angebrachte Ösen 1a verwendet werden können. Am Smartboard 1 kann horizontal oder vertikal gearbeitet werden. In Fig. 2 ist das Innere eines solchen Smartboards 1 dargestellt, Fig. 3a und 3b zeigen eine Vergrösserung einzelner Segmente davon. Zwischen diesen Oberflächen 2, 3 ist eine Vielzahl von Taschen 4 parallel zueinander angeordnet, die an Gelenken 5 miteinander verbunden sind. In jeder Tasche 4 sind eine oder mehrere elektrisch miteinander verbundene Printplatten 6 angeordnet, die eine Vielzahl von NFC Empfängern 7 in einem Array umfassen. Ebenfalls in jeder Tasche 4 sind eine Vielzahl von Magneten 8 in Form von Ferromagneten oder Permanentmagneten in einem Array angeordnet. Sie können in dafür vorgesehenen Aussparungen 13 in den Printplatten 6 gelagert sein. Wenn als Magnete 8 Permanentmagnete gewählt werden, insbesondere stabförmige, ist es vorteilhaft, wenn diese derart gelagert sind, dass sie sich ausrichten können. Vorzugsweise sind die NFC Empfänger 7 und die Magnete 8 jeweils alternierend im Array angeordnet. Wie in Fig. 3a und 3b dargestellt, können Printplatten 6 innerhalb einer Tasche 4 beispielsweise an elektrischen Verbindungen 9a zusammengesteckt werden, um elektronisch miteinander kontaktiert zu sein. Fig. 4 zeigt einen Querschnitt einzelner Taschen 4 im Bereich der Printplatten 6 und der Magnete 8.

Die Printplatten 6 benachbarter Taschen 4 sind an elektronischen Verbindungen 9a miteinander verbunden, vorzugsweise meanderförmig, wie in Fig. 2 dargestellt. Eine erste der Printplatten 6a ist mit einem Anschluss 9 versehen für die Verbindung zu einer Stromversorgung 10 und für eine Datenausgabe, um Daten beispielsweise an einen Computer 10 zu übermitteln.

Zudem können in den Taschen 4 ein oder mehrere durch einen Benutzer auslösbare Schalter 15 angeordnet sein, vorzugsweise Druckschalter. In einer bevorzugten Ausführung ist jedem NFC Empfänger 7 ein eigener Schalter 15 zugeordnet, wie in Fig. 3b dargestellt. Je nach Aufbau des Schalters 15 kann er derart ausgestaltet sein, dass er wahlweise von der ersten und/oder von der zweiten Oberfläche 2, 3 her durch einen Benutzer durch Drücken betätigbar ist, oder es können zwei gegenüberliegende Schalter 15 angeordnet sein, wie im rechten Teil der Fig. 4 dargestellt. Jeder Schalter 15 ist ebenfalls mit dem Anschluss 9 für die Datenausgabe verbunden.

Da die Taschen 4 gelenkig miteinander verbunden sind, lässt sich das Smartboard 1 zu einer Rolle 11 aufrollen mit einer Achse 12 parallel zu den lang ausgestalteten Taschen 4, wie in Fig. 5 dargestellt. Vorzugsweise weisen die Taschen 4 druckfeste Gehäuse 14 auf, in denen die Printplatten 6 und die Magnete 8 geschützt angeordnet sind. Die Schalter 15 sind schliesslich an diesen Gehäusen 14 angebracht, damit sie von aussen betätigbar sind, beispielsweise durch Drücken.

Vorzugsweise besteht mindestens die erste Oberfläche 2 aus einem flexiblen Material, insbesondere aus einem textilen Material wie aus einer Filzmatte 2a, sodass diese Oberfläche 2 von einem Pin oder von einer Nadel durchstechbar ist. Informationen können so einfach auf Zetteln geschrieben und an das Smartboard 1 angepinnt werden.

Alternativ oder zusätzlich dazu kann mindestens die zweite Oberfläche 3 aus einem druckfesten Material bestehen, vorzugsweise aus Kunststoffplatten 3a. Vorzugsweise ist diese spaltarm ausgestaltet, wenn das Smartboard 1 vollständig abgewickelt ist. Diese zweite Oberfläche 3 lässt sich einfach mit abwaschbaren Markern beschriften, und es lassen sich selbstklebende Notizzettel daran anbringen. Es ist auch möglich, beide Oberflächen 2, 3 gleichartig auszugestalten.

Mit einem derartigen Smartboard 1 lässt sich nun arbeiten. Informationen können auf verschiedene Arten auf dem Smartboard 1 angebracht werden. Das beschriebene oder bestückte Smartboard 1 ist modular erweiterbar durch weitere hier beschriebene Module 17, 19, 21, 23, 25, 28, welche zusammen mit dem Smartboard 1 ein Set 16 bilden. Jedes dieser Module 17, 19, 21, 23, 25, 28 lässt sich aber auch alleine oder in Zusammenhang mit anderen solchen Modulen 17, 19, 21, 23, 25, 28 oder mit hier nicht genannten Komponenten verwenden. Der Zweck soll dabei stets sein, Informationen in einer Gruppenarbeit oder Projektarbeit zu organisieren, zu speichern oder weiterzuleiten. Ein Coach führt und begleitet in der Regel solche Gruppenarbeiten und erklärt den Teilnehmern die Arbeitsweise mit dem Smartboard 1 und den Modulen 17, 21, 23, 25, 28.

So können beispielsweise Informationen auf geeignete, magnetisch haftende Module 17, 19, 21, 23, 25 geschrieben werden, die an den Magneten 8 im Smartboard 1 haften. Sie können auch übereinandergelegt, in Gruppen zusammengefasst, oder in eine logische Abfolgereihe gebracht werden. Zusätzliche Informationen können auch direkt an das Smartboard 1 angebracht werden.

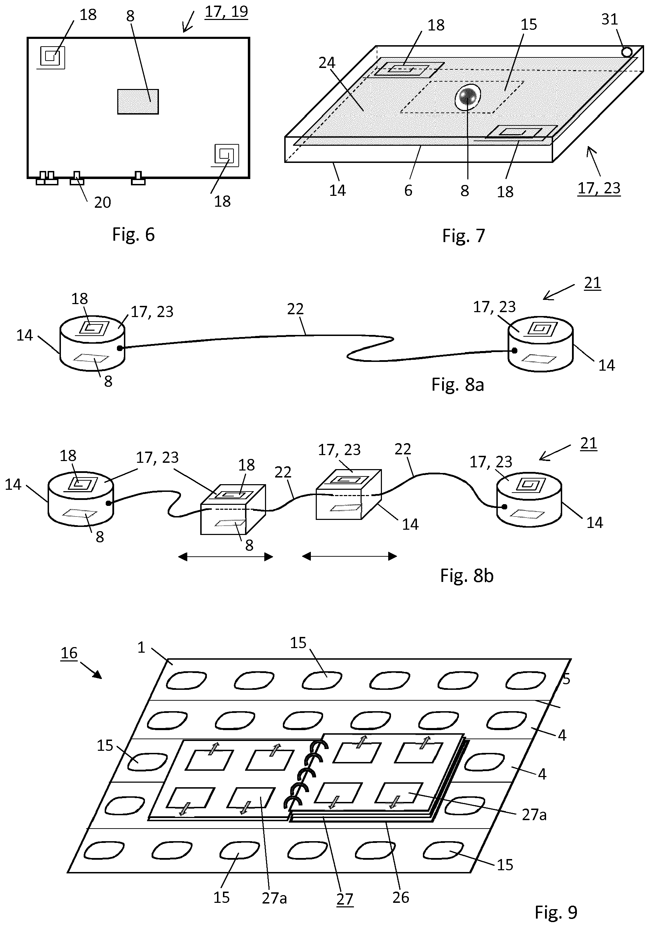

Ein Set 16 umfasst beispielsweise ein Smartboard 1 sowie als Module zwei oder mehr Objekte 17, wie dargestellt in Fig. 6 oder 7. In der Regel wird eine Vielzahl solcher Objekte 17 verwendet. Jedes dieser Objekte 17 umfasst mindestens ein Magnet 8 in Form eines Permanentmagneten oder Ferromagneten sowie mindestens eine, vorzugsweise zwei RFID-Transponder 18. Die Objekte 17 können wahlweise auch einen Schalter 15 umfassen, insbesondere einen Druckschalter.

In einer ersten bevorzugten Ausführung gemäss Fig. 6 sind eines oder mehrere dieser Objekte 17 als Karte 19 ausgestaltet. Beispielsweise weisen die Karten 19 die Grösse und Form von Kreditkarten oder Visitenkarten auf. In einer bevorzugten Ausgestaltung weisen sie eine Kodierung 20 auf, beispielsweise in Form von Kerben. Solche Kodierungen 20 können helfen, Karten 19, die zu einer Gruppe gehören und alle dieselbe Kodierung 20 aufweisen, von anderen Karten 19 zu trennen. Dazu werden die Karten 19 in dafür vorgesehene Schachteln gegeben, welche am Boden Rillen aufweisen, die mit den Kerben 20 einer jeweiligen Gruppe korrespondieren. Karten 19, die nicht zu dieser Gruppe gehören und daher eine andere Kodierung 20 aufweisen, stehen an mindestens einer der Rillen an und erheben sich dadurch gegenüber den anderen Karten 19, die an diesen Stellen eine Kerbe 20 aufweisen. So können sie leicht aussortiert werden.

Eine zusätzliche Farbkodierung an der Seite kann beispielsweise die Reigenfolge der Karten 19 markieren, wenn jede Folgekarte 19 die Farbmarkierung ein wenig versetzt aufweist gegenüber ihrer Vorgängerkarte. Eine Kontrolle der Reihenfolge ist so sehr einfach möglich.

Alternativ zur Ausgestaltung als Karte 19 können die Objekte 17 als Dose 23 mit einem Gehäuse 24 und einem Innenraum 24 ausgestaltet sein, wie in Fig. 7 dargestellt. Eine Dose 23 ist im Unterschied zu einer Karte 19 griffiger. Im Innenraum 24 jeder Dose 23 können der oder die RFID-Transponder 18 und das Magnet 8 untergebracht sein, zudem kann zusätzlich auch ein Schalter 15 an der Dose 23 angebracht sein. Das Magnet 8 ist vorzugsweise in Form eines Permanentmagneten ausgestaltet und derart im Innenraum 24 gelagert, dass es sich frei ausrichten kann. Es können auch mehrere Magnete 8 vorgesehen sein. Auf einer Printplatte 6 können weitere geeignete Elektronikkomponenten angeordnet sein. Beispielsweise kann die Dose 23 über eine LED 31 verfügen, welche Rückmeldung nach Betätigung des Schalters 15 gibt. Die Speisung dafür kann über die RFID-Transponder 18 vom Smartboard 1 verlaufen. Die Dosen 23 schützen die im Innenraum 24 angeordneten Komponenten vor äusseren Kräfteeinwirkungen sowie vor Verschmutzung.

Solche Objekte 17 oder Karten 19 können bereits beschriftet sein oder während der Arbeit beschriftet werden. Dank ihrer Magnete 8 haften sie am Smartboard 1. Ihre RFID-Transponder 18 korrespondieren mit den NFC-Empfängern 7. Dadurch kann einem am Smartboard 1 angeschlossenen Computer 10 die ID Nummer der Karte 19 sowie die Position auf dem Smartboard 1 übermittelt werden, an der sie haftet. Der Karte 19 können weitere Eigenschaften zugeordnet sein, die in einer Datenbank gespeichert sind, auf welche der Computer 10 Zugriff hat. Zudem können weitere Aktionen hervorgerufen werden, wenn beispielsweise ein Schalter 15 des Smartboards 1 betätigt wird, bevor eine Karte 19 darauf angehaftet wird. Es können visuelle oder andere Informationen abgerufen werden oder es können Zuordnungen zur ID Nummer der jeweiligen Karte 19 erfolgen. Beispielsweise kann eine Zuordnung geschaffen werden wie «das nächste Foto, das mit einer dem Smartboard 1 zugeordneten Kamera gemacht wird, wird in einer Datenbank mit der ID Nummer derjenigen Karte 19 in Verbindung gesetzt, die auf den Schalter 15 gehaftet wird». So kann beispielsweise das Bild einer Person, die als Projektleiter eingesetzt werden soll, oder ein Bild eines Architekturmodells, dessen Realisierung erfolgen soll, einer Karte 19 zugeordnet werden. Beim erneuten Betätigen des Schalters 15 kann auf einem Display das entsprechende Bild abgebildet werden. Sind mehrere Karten 19 übereinander angeordnet, so werden entsprechend die Bilder all dieser Karten 19 angezeigt. Dies sind nur einige wenige Beispiele. Ein Managementsystem kann eine Vielzahl von Moderationsprogrammen enthalten, die unterschiedliche Anweisungen für Arbeiten mit dem Smartboard 1 und den verschiedenen Objekten 17, 19, 21, 23, 25, 28 aufführen. Entsprechend kann ein Managementsystem eine oder mehrere Schachteln von Karten 19 verschiedener Gruppen umfassen, wobei die ID Nummern der einzelnen Karten 19 bereits in einer Datenbank erfasst und mit gewissen Informationen in Korrelation gebracht sind.

Ein weiteres Set 16 umfasst wiederum ein Smartboard 1 und Objekte 17, wie oben beschrieben. Zudem umfasst es ein oder mehrere Verbindungselemente 21, dargestellt in Fig. 8a und 8b. Ein Verbindungselement 21 umfasst zwei durch ein Verbindungsband 22 miteinander verbundene Objekte 17. Das Verbindungsband 22 stellt lediglich eine visuelle und strukturelle Verbindung der Objekte 17 dar, es kann elastisch sein. Die Objekte 17 können als Karten 19 ausgestaltet sein oder als Dosen 23, wie in Fig. 8a dargestellt. Werden die beiden Endpunkte des Verbindungsbandes 22 mit den Magneten 8 der Objekte 17 auf dem Smartboard 1 platziert, so kann eine Zuordnung der beiden Stellen dieser Endpunkte zueinander geschaffen werden. Dies kann eine zeitliche Reihenfolge bedeuten, eine Hierarchie, eine Zusammengehörigkeit oder dergleichen. Die Dosen 23 können wie in Fig. 7 beschrieben ausgestaltet sein. Insbesondere können sie ein Gehäuse 14 mit einem Innenraum 24 aufweisen.

In einer bevorzugten Ausführung eines Verbindungselementes 21, wie in Fig. 8b dargestellt, sind am Verbindungsband 22 ein oder zwei weitere solche Objekte 17 verschiebbar angebracht. Wenn nur ein weiteres Objekt 17 angebracht ist, kann es beispielsweise als Prozentangabe aufgefasst werden: eine Platzierung des verschiebbaren Objektes 17 mittig zwischen den Enden des Verbindungsbandes 22 bedeutet 50%, eine hälftige Verschiebung zu einem Ende entsprechend 25% oder 75%, je nach der vordefinierten Ausgangslage. Die Skalierung kann nicht beliebig fein aufgelöst werden, die Platzierung wird auf Grund der Platzierung der RFID-Transponder 18 durch die NFC Empfänger 7 erfasst.

Wenn zwei Objekte 17 im Verbindungsband 22 beweglich angeordnet sind, wie in Fig. 8b dargestellt, kann dies beispielsweise als Bereich zwischen Minimum und Maximum interpretiert werden, welche jeweils durch die Objekte 17 an den Enden des Verbindungsbandes 22 definiert sind. Die Erfassung der Positionen auf dem Smartboard 1 geschieht gleich wie bei nur einem verschiebbaren Objekt 17. Die Verbindungselemente 21 können wahlweise auf dem Smartboard 1 direkt oder auf Karten 17 platziert werden, wenn solche bereits auf dem Smartboard 1 angeordnet sind.

Die Objekte 17 eines Verbindungselementes 21 können wahlweise als Karte 19, wie in Fig. 6, oder als Dose 23 mit einem Innenraum 24 ausgestaltet sein, wie in Fig. 7 beschrieben.

In einer weiteren bevorzugten Ausführung umfasst ein Set 16 oder ein Smartboard 1 ein Objekt 17 in Form eines Smartbooks 25, dargestellt in Fig. 9. Voraussetzung dafür ist, dass jedem NFC Empfänger 7 des Smartboards 1 ein eigener Schalter 15 zugeordnet ist. Ein Smartbook 25 umfasst eine Platte 26, deren Länge sich über zwei oder mehr Arrayabstände von Schaltern 15 im Smartboard 1 und/oder deren Breite sich über zwei oder mehr Taschen 4 erstreckt. Die Platte 26 weist mehrere in einem Array oder Raster angeordnete Magnete 8 in Form von Ferromagneten oder Permanentmagneten auf sowie mindestens zwei RFID-Transponder 18, analog der Karte 19 aus Fig. 6. Zudem ist an ihr ein mehrseitiges Heft 27 angebracht, dessen Seiten mit Anweisungen und Auswahl-Varianten 27a versehen sind. Jeder dieser Varianten 27a kann ein Schalter 15 des Smartboards 1 zugeordnet werden, der unmittelbar um das Smartbook 25 herum angeordnet ist, wenn es, im Gebrauch, auf dem Smartboard 1 haftet. Beim Betätigen dieser Schalter 15 werden Zusatzinformationen abgerufen, die wiederum Anweisungen enthalten können. Zudem kann ein Schalter 15 definiert werden, der dann betätigt werden soll, wenn die Seite abgeschlossen ist. Danach wird umgeblättert und die Instruktionen der nächsten Seite werden befolgt, nachdem weitere Zusatzinformationen abgerufen wurden.

Solche Smartbooks 25 können für verschiedene Workshops oder Projekte gefertigt werden und den oder die Benutzer durch einen Prozess führen, beispielsweise durch einen Entscheidungsprozess. Die verschiedenen Aspekte (Preis, Qualität, Bedarf, Risiko etc.) können jeweils auf einer Seite ausgeleuchtet werden und die Varianten, die den Benutzern zur Auswahl stehen, den umliegenden Schaltern 15 auf dem Smartboard 1 zugeordnet sein. Das Smartboard 1 erkannt die Lage des Smartbooks 25 durch die beiden RFID-Transponder, die mit den NFC Empfängern auf dem Smartboard 1 korrespondieren. Auch hier werden alle Informationen, die durch die Benutzer auf dem Smartboard durch Betätigen der Schalter 15 eingegeben werden, an den Computer geschickt und dort weiterverarbeitet.

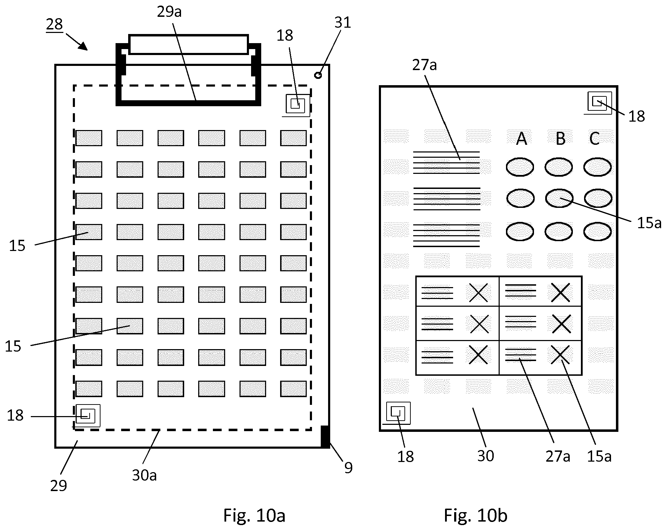

Erfindungsgemäss kann ein Clipboard 28 gemäss Fig. 10a alleine oder als zusätzliches Modul mit dem Smartboard 1 oder mit einem genannten Set 16 verwendet werden. Ein erfindungsgemässes Clipboard 28 umfasst eine Unterlage 29 mit Befestigung 29a für ein Blatt Papier 30, wie es in Fig. 10b dargestellt ist, und ist mit mindestens einem, vorzugsweise zwei RFID-Transpondern 18 versehen. Das Blatt Papier 30 selbst umfasst ebenfalls einen oder zwei RFID-Transponder 18, wobei mindestens je ein RFID-Transponder 18 der Unterlage 29 und des Blatt Papiers 30 miteinander in Kommunikationsnähe angeordnet werden, wenn das Blatt Papier 30 an der Befestigung 29a fixiert ist. Die Unterlage 29 weist eine Markierung 30a auf, welche angibt, wo genau das Blatt Papier 30 platziert werden soll. Die Unterlage 29 umfasst zudem eine Vielzahl von Schaltern 15, vorzugsweise in einer Matrix angeordnet. Sie können gekennzeichnet oder hinter einer Oberfläche im Verborgenen angeordnet sein. Entsprechend dem Smartbook 25 kann auch das Blatt Papier 30 ein Teil einer Sammlung von vorgefertigten Blättern Papier 30 sein. Jedes dieser Blätter 30 ist mit verschiedenen Informationen, Anweisungen und Auswahl-Varianten 27a versehen sowie mit mehreren Kennzeichnungsfeldern 15a, die jeweils an den Orten der Schalter 15 des Clipboard 28 angeordnet sind, wenn das Blatt 30 auf der Markierung 30a der Unterlage 29 befestigt ist. Der Benutzer betätigt jeweils je nach Situation die entsprechenden Schalter 15, indem er beispielsweise darauf drückt. In Fig. 10b sind die Kennzeichnungsfelder 15a, die auswahlweise betätigbar sind, durch Kreise gekennzeichnet, die unter den Buchstaben A, B und C angeordnet sind. Weitere Kennzeichnungsfelder 15a befinden sich an den Stellen der Kreuze der unteren Tabelle. Der Benutzer betätigt je nach dem, was zutrifft, die entsprechenden Schalter 15 auf dem Clipboard 28, indem er auf die Kennzeichnungsfelder 15a drückt. Vorzugsweise ist jeder Schalter 15 als Drucktaster ausgestaltet.

Das Clipboard 28 kann zudem einen Anschluss 9 umfassen, der auch eine drahtlose Schnittstelle sein kann, mit dem die erfassten Daten an einen Computer 10 übermittelt werden.

Das Clipboard 28 kann auch ein oder mehrere LEDs 31 umfassen, um Feedback für getätigte Aktionen zu geben oder um Informationen zu erhalten. Beispielsweise kann durch ein Leuchten der LED 31 angezeigt werden, dass auf einem Bildschirm Informationen zu einem gewissen Sachverhalt dargestellt sind.

Die Set 16 umfassend ein Smartboard 1 und ein Objekt 17, wobei das Objekt eine Karte 19, eine Dose 23, ein Verbindungselement 21 oder ein Clipboard 28 ist, ist nicht als solches in den Figuren gekennzeichnet. Die Objekte 19, 21, 23 und 28 sind nur allein dargestellt, ohne Smartboard 1. Nur das Set 16 umfassend ein Smartboard 1 und ein Smartbook 25 ist in Fig. 9 dargestellt. Das hier beschriebene Objekt 28 gemäss dieser Erfindung kann erfindungsgemäss auch allein oder in Kombination mit anderen Objekten 17, 19, 21, 23, 25 und 28 benutzt werden.

**Bezugszeichenliste**

| | | | |
|---|---|---|---|
| 1 | Smartboard | 1a | Ösen |
| 2 | Erste Oberfläche; | 2a | Filzmatte |
| 3 | Zweite Oberfläche; | 3a | Kunststoffplatte |
| 4 | Tasche | | |
| 5 | Gelenk | | |
| 6 | Printplatte | 6a | erste Printplatte |
| 7 | NFC Empfänger | | |
| 8 | Magnet, Ferromagnet oder Permanentmagnet | | |
| 9 | Anschluss | 9a | elektrische Verbindung |
| 10 | Stromversorgung, Computer | | |
| 11 | Rolle | | |
| 12 | Achse | | |
| 13 | Aussparung | | |
| 14 | Gehäuse | 14a | Gehäuseteil |
| 15 | Schalter, Druckschalter | 15a | Kennzeichnungsfeld für einen Schalter |
| 16 | Set | | |
| 17 | Objekt | | |
| 18 | RFID-Transponder | | |
| 19 | Karte | | |
| 20 | Kodierung, Kerbe | | |
| 21 | Verbindungselement | | |
| 22 | Verbindungsband | | |
| 23 | Dose | | |
| 24 | Innenraum | | |
| 25 | Smartbook | | |
| 26 | Platte | | |
| 27 | Heft | 27a | Informationen, Anweisungen, Auswahl-Varianten |
| 28 | Clipboard | | |
| 29 | Unterlage | 29a | Befestigung |
| 30 | Blatt Papier | 30a | Markierung für ein Blatt Papier |
| 31 | LED | | |

## Patentansprüche

1. Clipboard (28) ausgestaltet als Unterlage (29) für ein Blatt Papier (30) mit einer Befestigung (29a) dafür, wobei die Unterlage (29) mit mindestens einem, vorzugsweise mit zwei RFID-Transpondern (18) versehenen ist, umfassend eine Markierung (30a) auf der Unterlage (29), welche angibt, wo genau das Blatt Papier platziert werden soll sowie mindestens ein Blatt Papier (30) mit einem RFID-Transponder (18), wobei je ein RFID-Transponder (18) der Unterlage (29) und des Blattes Papier (30) miteinander in Kommunikationsnähe angeordnet sind, wenn das Blatt Papier an der Befestigung fixiert ist, **dadurch gekennzeichnet, dass** die Unterlage (29) eine Vielzahl von Schaltern (15) umfasst, die vorzugsweise in einer Matrix angeordnet sind, wobei das Blatt Papier (30) mit verschiedenen Informationen, Anweisungen und/oder Auswahl-Varianten (27a) versehen ist sowie mit mehreren Kennzeichnungsfeldern (15a), die jeweils an den Orten der Schalter (15) des Clipboard (28) angeordnet sind, wenn das Blatt Papier (30) auf der Markierung (30a) der Unterlage (29) befestigt ist.

2. Clipboard (28) nach Anspruch 1, **gekennzeichnet durch** mindestens eine LED (31), die Feedback für getätigte Aktionen anzeigen kann.

3. Clipboard (28) nach Anspruch 1 oder 2, **dadurch gekennzeichnet, dass** die Schalter (15) auf der Unterlage (29) gekennzeichnet oder hinter einer Oberfläche im Verborgenen angeordnet sind.

4. Clipboard (28) nach einem der vorhergehenden Ansprüche, **gekennzeichnet durch** einen Anschluss (9), der eine drahtlose Schnittstelle sein kann, mit dem erfasste Daten an einen Computer (10) übermittelt werden können.

5. Clipboard (28) nach einem der vorhergehenden Ansprüche, **dadurch gekennzeichnet, dass** das Blatt Papier (30) ein Teil einer Sammlung von vorgefertigten Blättern Papier (30) ist.

6. Clipboard (28) nach einem der vorhergehenden Ansprüche, **dadurch gekennzeichnet, dass** jeder Schalter (15) als Drucktaster ausgestaltet ist.

## Claims

1. A clipboard (28) designed as a support (29) for a sheet of paper (30) with an attachment (29a) for it, wherein the support (29) is provided with at least one, preferably with two RFID transponders (18), comprising a marking (30a) on the support (29) indicating precisely where the sheet of paper is to be placed, as well as at least one sheet of paper (30) with an RFID transponder (18), wherein a respective RFID transponder (18) of the support (29) and of the sheet of paper (30) are arranged in communication proximity with each other when the sheet of paper is fixed on the attachment, **characterized in that** the support (29) comprises a plurality of switches (15), which preferably are arranged in a matrix, wherein the sheet of paper (30) is provided with various information, instructions and/or selection variants (27a), as well as with several marking fields (15a), which each are where the switches (15) of the clipboard (28) are located when the sheet of paper (30) is fastened to the marking (30a) of the support (29).

2. The clipboard (28) according to claim 1, **characterized by** at least one LED (31), which can display feedback for initiated actions.

3. The clipboard (28) according to claim 1 or 2, **characterized in that** the switches (15) on the support (29) are labeled or hidden behind a surface.

4. The clipboard (28) according to one of the preceding claims, **characterized by** a port (9), which can be a wireless interface, with which acquired data can be transmitted to a computer (10).

5. The clipboard (28) according to one of the preceding claims, **characterized in that** the sheet of paper (30) is part of a collection of prefabricated sheets of paper (30) .

6. The clipboard (28) according to one of the preceding claims, **characterized in that** each switch (15) is designed as a pushbutton.

## Revendications

1. Planchette à pince (28), conçue sous la forme d'un support (29) pour une feuille de papier (30), dotée d'une fixation (29a) pour celle-ci, le support (29) étant muni d'au moins un, de préférence de deux transpondeurs RFID (18), comprenant un marquage (30a) sur le support (29), lequel indique l'endroit précis où doit être placée la feuille de papier, ainsi qu'au moins une feuille de papier (30) dotée d'un transpondeur RFID (18),
chaque fois un transpondeur RFID (18) du support (29) et de la feuille de papier (30) étant disposé en proximité de communication mutuelle lorsque la feuille de papier est fixée sur la fixation, **caractérisée en ce que** le support (29) comprend une pluralité d'interrupteurs (15), qui sont disposés de préférence dans une matrice, la feuille de papier (30) étant munie de différentes informations, instructions et / ou variantes de sélection (27a), ainsi que de plusieurs champs d'identification (15a), qui sont chaque fois disposés aux endroits des interrupteurs (15) de la planchette à pince (28), lorsque la feuille de papier (30) est fixée sur le marquage (30a) du support (29).

2. Planchette à pince (28) selon la revendication 1, **caractérisée par** au moins une LED (31), susceptible d'afficher des commentaires pour des actions exécutées.

3. Planchette à pince (28) selon la revendication 1 ou 2, **caractérisée en ce que** les interrupteurs (15) sont disposés sur le support (29) en étant identifiés ou en étant dissimulés derrière une surface.

4. Planchette à pince (28) selon l'une quelconque des revendications précédentes, **caractérisée par** une connexion (9), qui peut être une interface sans fil, à l'aide de laquelle des données saisies peuvent être transférées à un ordinateur (10).

5. Planchette à pince (28) selon l'une quelconque des revendications précédentes, **caractérisée en ce que** la feuille de papier (30) est une partie d'une collection de feuilles de papier (30) préfabriquées.

6. Planchette à pince (28) selon l'une quelconque des revendications précédentes, **caractérisée en ce que** chaque interrupteur (15) est conçu sous la forme d'un bouton poussoir.
